# EUROPÄISCHE PATENTSCHRIFT

(11) **EP 2 817 873 B1**
(45) Veröffentlichungstag und Bekanntmachung des Hinweises auf die Patenterteilung: **01.08.2018**
(21) Anmeldenummer: 13707314.4
(22) Anmeldetag: 20.02.2013
(51) Int. Cl.: H02M 3/158, G05F 3/08, H01F 3/14, H01F 38/02, H02M 1/00

(54) **MULTIPHASENWANDLER**
MULTI-PHASE CONVERTER
CONVERTISSEUR POLYPHASÉ

(30) Priorität: 20.02.2012 DE 102012202578
(43) Veröffentlichungstag der Anmeldung: 31.12.2014
(73) Patentinhaber: Robert Bosch GmbH, 70442 Stuttgart (DE)
(72) Erfinder: DRAESE, Nils, 70469 Feuerbach (DE); SCHINZEL, Mirko, 70378 Stuttgart (DE); SCHOETTLE, Richard, 75248 Oelbronn (DE)
(86) Internationale Anmeldenummer: PCT/EP2013/053345
(87) Internationale Veröffentlichungsnummer: WO 2013/124296

(56) Entgegenhaltungen:
- US-A- 5 909 069
- US-A1- 2009 179 723
- US-A1- 2009 231 081
- ZUMEL P ET AL: "Tight magnetic coupling in multiphase interleaved converters based on simple transformers", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, Bd. 1, 6. März 2005 (2005-03-06), Seiten 385-391, XP010809822, DOI: 10.1109/APEC.2005.1452960 ISBN: 978-0-7803-8975-5
- CZOGALLA J ET AL: "Automotive application of multi-phase coupled-inductor DC-DC converter", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 3, 12. Oktober 2003 (2003-10-12), Seiten 1524-1529, XP010676197, DOI: 10.1109/IAS.2003.1257758 ISBN: 978-0-7803-7883-4

## Beschreibung

### Stand der Technik

Ein Leistungswandler, der auch als Gleichspannungswandler oder DC/DC-Wandler bezeichnet werden kann, ist dazu ausgebildet, eine Gleichspannung am Eingang in eine Gleichspannung mit anderem Spannungsniveau umzuwandeln. Ein derartiger Leistungswandler kann auch als Multiphasenwandler mit verkoppelten Induktivitäten ausgebildet sein. Verkoppelte Multiphasenwandler umfassen mehrere Phasen, wobei jede Phase durch einen stromdurchflossenen Leiter geführt ist, die durch magnetische Kopplungsmittel miteinander verkoppelt sind. Eine durch jede Phase erzeugte Stromwelligkeit durch die magnetische Kopplung kann jedoch den Betrieb des Multiphasenwandlers beeinträchtigen, weshalb Abschnitte der einzelnen Leiter zueinander geeignet anzuordnen sind, um bspw. Nachteile einer elektromagnetischen Verträglichkeit zu vermeiden.

Die Druckschrift WO 2012/028558 A1 beschreibt einen Multiphasenwandler, bei dem durch die magnetisch gegensinnige Kopplung einer Phase von zumindest sechs Phasen mit zumindest drei weiteren Phasen eine störende gegenseitige Beeinflussung der Phasen minimiert und ein großer Teil des magnetischen Flusses kompensiert wird. Die zu verkoppelnden Phasen werden dabei so ausgewählt, dass eine optimale Kompensation erreicht werden kann. Dies erfolgt durch ein gegenläufiges Stromprofil der Phasen. Ziel ist es hierbei, dass die Phasen magnetisch so gekoppelt werden, dass das resultierende Magnetfeld aufgrund der verkoppelten Phasen minimiert wird. Dabei wird ein Ferritkern zur Kopplung der magnetischen Flüsse verwendet, um von der hohen Permeabilität des Materials zu profitieren. Bei der hier vorgeschlagenen Kopplung können die Phasen der Reihe nach und voneinander unabhängig angesteuert werden.

Aus der Druckschrift DE 10 2010 040 202 A1 ist ein Multiphasenwandler mit mehreren Phasen bekannt, die jeweils durch ein Schaltmittel ansteuerbar sind. Dabei ist das Kopplungsmittel vorgesehen, zumindest eine der Phasen mit zumindest drei weiteren Phasen magnetisch zu koppeln.

Die Druckschrift DE 10 2010 040 222 A1 beschreibt einen Multiphasenwandler für mehrere elektrische Phasen, die jeweils durch Schaltmittel ansteuerbar sind. Dabei sind Kopplungsmittel vorgesehen, die zumindest eine erste Phase mit zumindest einer zweiten Phase magnetisch koppeln, wobei mindestens zwei Phasen räumlich in einer Ebene verlaufen.

Ein ähnliche Multiphasenwandler ist in der Druckschrift DE 10 2010 040 205 A1 beschrieben. Bei diesem sind mindestens zwei Kopplungsmittel vorgesehen, wobei zumindest eines der beiden Kopplungsmittel eine geringere Induktivität als das andere Kopplungsmittel aufweist.

Es sind somit verschiedene Konzepte mit verkoppelten Induktivitäten bekannt, die jedoch, zumindest zum Teil, verschiedene Nachteile haben, von denen nachfolgend exemplarisch einige genannt sind. So führt eine zu hohe Verkopplung zu EMV Probleme. Ein zu komplexer Aufbau bedingt hohe Fertigungskosten. Liegen der Phasenanfang und das Phasenende räumlich getrennt vor, so führt dies zu EMV- und Wirkungsgradnachteilen durch Leiterschleifen. Weiterhin verursachen hohe Kernverluste im Leerlauf einen schlechten Wirkungsgrad bei Minderlast. Ein zu flächiger Aufbau benötigt einen zu großen Bauraum. Zudem verursacht ein hoher Volumenbedarf an Weichmagnetmaterial hohe Kosten.

Zu beachten ist, dass es in der Leistungselektronik DC/DC-Wandlertopologien gibt, in denen ein Streufluss explizit für die Funktion benötigt wird. Dazu zählen u. a. Wandler mit gekoppelten Induktivitäten. In speziellen Streufeldtransformatoren, wie bspw. Klingeltrafos, Schweisstrafos, Vorschalttrafos usw., wird der Streufluss zur Kurzschlussfestigkeit und damit zur Stromregulierung verwendet. Dieser zusätzliche Streufluss kann in geringem Umfang durch die Art und/oder Ausführung der Kupferwicklung in dem Ferritkern beeinflusst werden.

In den Fällen, in denen diese geringe, zusätzlich machbare Streuinduktivität nicht ausreicht, müssen zusätzliche Induktivitäten, bspw. mit Bauteilen, in den Strompfad eingestaltet werden. Dies führt neben zusätzlichem Bauraum auch zu zusätzlichen Bauteilkosten und Verlustleistungen.
Ein weiterer Multiphasenwandler ist beispielsweise aus der WO 2009/114873 A1 bekannt. Der darin beschriebene DC/DC-Wandler umfasst eine Spule mit nicht linearem induktivem Widerstand, ein Schaltsystem und einen Ausgangsfilter. Dabei werden benachbarte Phasen miteinander gekoppelt.
Aus der EP 1 145 416 B1 ist bereits ein Umrichter für die Umformung von elektrischer Energie bekannt. So wird hier vorgeschlagen, dass die Drosselgröße durch die Verwendung von gekoppelten Induktivitäten reduziert werden kann. Hierbei sollen die gekoppelten Drosseln so dimensioniert werden, dass die Lastströme der Teilzweige sich gegenseitig kompensieren und zu keiner magnetischen Belastung der Drossel führen. Nur der Differenzstrom zwischen den einzelnen Teilzweigen führt dann zu einem magnetischen Feld.
Aus der US 2009/0179723 A1 ist bereits ein DC/DC-Wandler gekannt, bei dem über einen gezielt gewählten Abstand zweier magnetisch zu koppelnder Phasen die Streuinduktivität eingestellt werden kann.

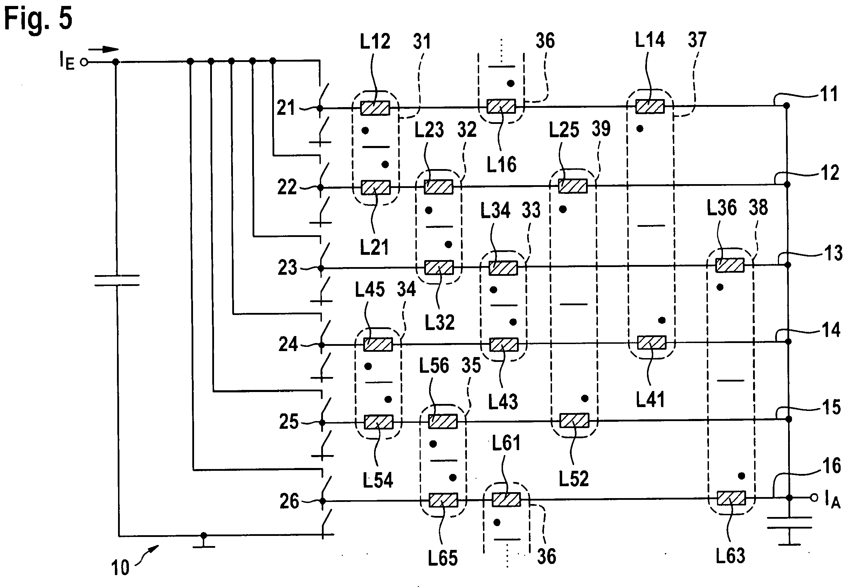

Aus der Veröffentlichung Zumel P et al: "Tight magnetic coupling in multiphase interleaved converters based on simple transformers", Applied Power Electronics Conference and Exposition, 2005. Apec 2005. Twentieth Annual IEEE Austin, TX, USA 6-10 March 2005, Piscataway, NJ, USA, IEEE, US, Bd. 1, 6. März 2005 (2005-03-06), Seiten 385-391, XP010809822, DOI: 10.1109/Apec.2005.1452960 ISBN: 978-0-7803-8975-5 ist bereits ein verkoppelter Multiphasenwandler bekannt. Bei einem Ausführungsbeispiel gemäß Figur 5 sind jeweils sechs Phasen vorgesehen, welche in unterschiedlichen Ausführungsbeispielen jeweils unterschiedlich miteinander verkoppelt werden.

### Offenbarung der Erfindung

Die Erfindung betrifft einen Multiphasenwandler mit genau vier elektrischen Phasen gemäß Anspruch 1. Vorteilhafte Ausführungsformen sind in den abhängigen Ansprüchen definiert. In Verbindung mit dem Multiphasenwandler wird ein Verkopplungskonzept vorgestellt, das hinsichtlich der Anforderungen für automotive Hochleistungswandler in Bezug auf Bauraum, Kosten und Wirkungsgrad optimiert ist.
Von Bedeutung ist, dass Phasen mit Kopplungsmitteln magnetisch gekoppelt werden, wobei jedes Kopplungsmittel jeweils mindestens zwei Phasen koppelt, wobei jede Phase jeweils mindestens zwei Windungen umfasst. Ein weiterer Multiphasenwandler ist aus der Veröffentlichung Czogalla J et al: "Automotive application of multi-phase coupled-inductor DC-DC converter", Conference Record of the 2003 IEEE Industry Applications Conference. 38th. IAS Annual Meeting. Salt Lake City, UT, Oct. 12 - 16, 2003; [Conference Record of the IEEE Industry Applications Conference. IAS Annual Meeting], New York, NY : IEEE, US, Bd. 3, 12. Oktober 2003 (2003-10-12), Seiten 1524-1529, XP010676197,DOI: 10.1109/IAS.2003.1257758 ISBN: 978-0-7803-7883-4. Der Multiphasenwandler kann derart ausgestaltet sein, dass durch das gezielte Einbringen eines magnetischen Streufluss die Kopplung der Phasen etwas verringert wird, wodurch eine Reduzierung der Verlustleistung und damit eine Steigerung des Wirkungsgrades erreicht werden kann. Dadurch konnten auch Störungen weiter reduziert werden. Dies wird erreicht durch ein Mittel zur Beeinflussung eines magnetischen Streuflusses, das zwischen zumindest zwei der zu koppelnden Phasen angeordnet ist. Diese Lösung kommt ohne zusätzlichen Bauraum aus und ist damit platzsparend.

Zu beachten ist, dass der vorgestellte Multiphasenwandler für eine Anzahl an Phasen ausgebildet sein kann. So können zwei, drei, vier, fünf, sechs oder mehr Phasen vorgesehen sein. Jeder Phase sind dabei mindestens zwei Windungen zugeordnet.

Besonders zweckmäßig ist das Mittel zur Beeinflussung eines magnetischen Streuflusses Magnetfluss leitend mit dem Kopplungsmittel verbunden. Damit könnte diese Funktionalität schon bei der Herstellung des Kopplungsmittels integriert werden, beispielsweise durch Pressen der Ferritkerne als Kopplungsmittel direkt im Herstellprozess.

In einer zweckmäßigen Weiterbildung ist vorgesehen, dass das Mittel zur Beeinflussung eines magnetischen Streuflusses mittig zwischen den zwei zu koppelnden Phasen angeordnet ist. Besonders zweckmäßig ist das Mittel zur Beeinflussung des Streuflusses rechteckförmig oder domförmig ausgebildet. In einer zweckmäßigen Weiterbildung ist vorgesehen, dass das Mittel zur Beeinflussung des Streuflusses nur auf einer Seite mit dem Kopplungsmittel verbunden ist. Diese Variante lässt sich besonders einfach fertigen, da das Mittel zur Beeinflussung des Streuflusses Teil des Kopplungsmittels ist und aus demselben Material besteht.

In einer zweckmäßigen Weiterbildung ist vorgesehen, dass zwischen dem Mittel zur Beeinflussung des Streuflusses und dem Kopplungsmittel ein Spalt, vorzugsweise ein Luftspalt, vorgesehen ist, bevorzugt in der Größenordnung von 1 mm, besonders bevorzugt zwischen 0,3 bis 0,5 mm. Diese Größe vermeidet unerwünschte Sättigungseffekte über ein gewisses Toleranzband hinweg.

In einer zweckmäßigen Weiterbildung ist vorgesehen, dass die zumindest eine Phase als Runddraht ausgeführt ist. Dadurch erhöhen sich die Streuflüsse und die Störungen können weiter reduziert werden.

In einer zweckmäßigen Weiterbildung ist vorgesehen, dass eine erste Phase im Wesentlichen einen ebenen, U-förmigen Verlauf aufweist, während eine zweite Phase einen im Wesentlichen rechteckförmigen, ebenen Verlauf aufweist. Diese so ausgebildeten Phasen lassen sich von Kopplungsmitteln, vorzugsweise handelsübliche Ferritkerne, umschließen. Dadurch wird in sehr einfacher Art und Weise unter Rückgriff eines matrizenförmigen Aufbaus die gewünschte Verkopplung der Phasen erreicht.

Es können eine Anzahl von Phasen, bspw. zwei bis fünf, vorgesehen sein. Dabei koppeln die Kopplungsmittel jeweils eine Phase mit genau einer anderen Phase, mit zwei Phasen, mit drei oder mehr Phasen. Zweckmäßig ist, wenn die einzelnen Phasen noch unabhängig voneinander gesteuert werden können. Jeder Phase sind dabei mindestens zwei Windungen zugeordnet.

In einer besonders zweckmäßigen Weiterbildung ist vorgesehen, dass genau sechs Phasen vorgesehen sind, wobei die Kopplungsmittel jede der sechs Phasen mit drei weiteren der sechs Phasen magnetisch koppeln. Bei dieser Art der Verkopplung ist einerseits gewährleistet, dass die einzelnen Phasen noch unabhängig voneinander gesteuert werden können. Außerdem lässt sich die Ausfallsicherheit des Multiphasenwandlers erhöhen aufgrund der stärkeren Vernetzung der Phasen.

In einer zweckmäßigen Weiterbildung ist vorgesehen, dass das Kopplungsmittel zumindest zwei Teile umfasst, wobei eines der Teile einen U-, O-, I- oder E-förmigen Querschnitt aufweist. Durch diesen Aufbau lassen sich besonders einfach die zu koppelnden Phasen durch das Kopplungsmittel umgeben. In einer zweckmäßigen Weiterbildung ist vorgesehen, dass zwischen zwei Teilen ein Spalt, vorzugsweise ein Luftspalt vorgesehen ist. Auf diese Art und Weise lässt sich besonders einfach die Induktivität beeinflussen. In einer zweckmäßigen Weiterbildung ist vorgesehen, dass mehrere, aus zumindest zwei Teilen bestehende Kopplungsmittel zumindest ein gemeinsames Teil aufweisen, vorzugsweise eine Metallplatte. Damit könnte sich die Montage erleichtern, da sämtliche Kopplungsmittel in nur einem Schritt durch das Aufsetzen der Platte geschlossen werden könnten.

In einer zweckmäßigen Weiterbildung ist vorgesehen, dass zumindest zwei, insbesondere drei Kopplungsmittel vorgesehen sind, um eine der Phasen mit zwei weiteren Phasen magnetisch zu koppeln, wobei zumindest eines der beiden Kopplungsmittel eine geringere Induktivität als das andere Kopplungsmittel, aufweist. Durch gezielte Wahl der Induktivität des Kopplungsmittels können verschiedene Aspekte beeinflusst und optimiert werden. Zum einen beeinflusst die Induktivität die Verlustleistung und damit auch die Wärmeentwicklung in den Kopplungsmitteln. Eine Reduzierung der Induktivität reduziert auch die Verlustleistung. Außerdem kann eine geringere Induktivität als Sättigungsschutz dienen. Dadurch sättigen Kopplungsmittel mit geringerer Induktivität erst später bei höheren Strömen, so dass sich der Multiphasenwandler im Fehlerfall noch länger in einem stabilen Betriebszustand betrieben werden kann. Andererseits reduziert eine hohe Induktivität den Stromripple, also die Welligkeit des Stroms. Damit kann mit der Wahl der geeigneten Induktivität die Verlustverteilung, Sättigungsverhalten und Stromwelligkeit optimiert werden.

In einer zweckmäßigen Weiterbildung ist vorgesehen, dass das Kopplungsmittel, das eine Phase mit einer Phase koppelt, die im Wesentlichen um etwa 180° phasenverschoben angesteuert ist, eine geringere Induktivität als zumindest eines der anderen Kopplungsmittel aufweist. Dadurch können diese in der Regel stärker belasteten Kopplungsmittel hinsichtlich der Verluste reduziert werden, so dass auch eine geringere Wärmeentwicklung erzielt wird.

Weitere Vorteile und Ausgestaltungen der Erfindung ergeben sich aus der Beschreibung den beigefügten Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt Kopplungselemente, die Phasen miteinander verkoppeln.
- Figur 2: zeigt ein Kopplungselement in einer Seitenansicht.
- Figur 3: zeigt das Verkopplungskonzept.
- Figur 4: zeigt weitere Kopplungselemente.
- Figur 5: zeigt eine Schaltungsanordnung.
- Figur 6: zeigt eine schematische Darstellung der jeweiligen Verkopplung der Phasen.
- Figur 7: zeigt eine Ansteuerung und Stromverläufe beim Ausführungsbeispiel gemäß Figur 5.
- Figur 8: zeigt einen Schnitt durch ein Kopplungsmittel mit zwei verkoppelten Phasen.
- Figur 9: zeigt einen Schnitt entlang der in Figur 4 angedeuteten Linie A bei einem matrixförmigen Aufbau mit neun Kopplungsmitteln in der Draufsicht.
- Figur 10: zeigt einen Schnitt durch ein Kopplungsmittel mit Mitteln zur Beeinflussung des Streuflusses mit zwei verkoppelten Phasen in einem alternativen Ausführungsbeispiel.
- Figur 11: zeigt ein alternatives Ausführungsbeispiel eines Kopplungsmittels mit einem Luftspalt und Mitteln zur Beeinflussung des Streuflusses.
- Figur 12: zeigt einen Schnitt durch ein Kopplungsmittel mit domförmigen Mitteln zur Beeinflussung des Streuflusses mit zwei verkoppelten Phasen in einem weiteren alternativen Ausführungsbeispiel.
- Figur 13: zeigt einen Schnitt durch ein Kopplungsmittel mit rechteckförmigen Mitteln zur Beeinflussung des Streuflusses mit zwei verkoppelten Phasen in einem weiteren alternativen Ausführungsbeispiel.
- Figur 14: zeigt einen Schnitt durch ein Kopplungsmittel mit rechteckförmigen Mitteln zur Beeinflussung des Streuflusses mit zwei verkoppelten Phasen in einem weiteren alternativen Ausführungsbeispiel, bei dem erste und zweite Phase immer abwechselnd angeordnet sind.
- Figur 15: zeigt einen Schnitt durch ein Kopplungsmittel mit Mitteln zur Beeinflussung des Streuflusses mit zwei als Runddrähte ausgeführten verkoppelten Phasen in einem weiteren alternativen Ausführungsbeispiel.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren zeigen den kompakten und flachen Aufbau des 4-phasigen Systems gekoppelter Induktivitäten mit einstellbarem Streufluss.

In diesem System sind pro Kopplungselement bzw. Kern jeweils zwei Phasen miteinander verkoppelt. In den vier Kernen ist somit jede Phase mit ihrem (zeitlichen) Vorgänger und Nachfolger magnetisch verkoppelt. Durch die Ausführung mit jeweils zwei Windungen pro Phase wird die magnetische Aussteuerung des Kernquerschnitts deutlich reduziert. Dies führt wiederum zu deutlich kleineren Kernverlusten und damit zu einem geringeren Kühlaufwand.

Aufgrund der Tatsache, dass in gekoppelten Systemen kein Luftspalt im Hauptflusspfad notwendig ist, können mit den zwei Windungen auch große Induktivitätswerte realisiert werden. Durch die gesteigerte Induktivität kann jeder Kern mit einem Luftspalt als Sättigungsschutz versehen werden.

Gegenüber Ausführungen mit nur einer Windung verdoppelt sich der Strom, der als Unsymmetrie/Lastaufteilung zwischen den Phasen toleriert werden kann. Die zusätzlichen Stege dienen dem Einbringen des erwünschten Streuflusses. Dies kann in der Fertigung durch Schleifen des Luftspaltes erfolgen. Der Aufbau ist einfach gestaltet, so daß Stanz- oder Biegeteile in die untere Kernhälfte eingelegt werden können und mit einer identischen zweiten Kernhälfe von oben geschlossen wird. Zusätzliche Wickeltechniken entfallen.

Wenn der zur Verfügung stehende Bauraum keine flächige Ausdehnung zulässt, kann die 2 x 2-Matrix auch zu einem schmalen und noch kompakteren Aufbau geklappt werden.

Dadurch ergeben sich mehrere Vorteile für automotive Niederspannungswandler mit hohen Leistungen und Wirkungsgraden:
1) Hoher Wirkungsgrad durch geringen Kupferwiderstand,
2) Geringe Ruheverluste und dadurch hoher Wirkungsgrad bei Minderlast,
3) Hohe Dynamik durch Verkopplung,
4) Einfach anpassbarer Streufluss und dadurch optimierbares EMV-Verhalten an die Lastforderungen,
5) Kleine Leiterschleife, da jede Phase direkt dort aus dem Kern herausgeführt werden kann, wo sie auch rein geführt wird. Dadurch kann sie direkt an der Schaltzelle mit einem Kondensator abgeschlossen werden, was für die EMV Vorteilhaft ist.

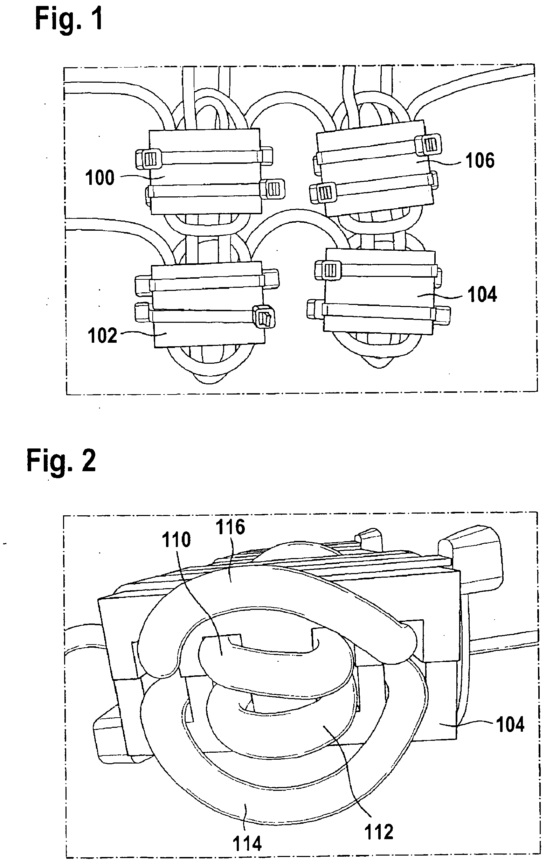

Figur 1 zeigt Kopplungsmittel 100, 102, 104 und 106, die jeweils zwei Phasen miteinander koppeln, wobei jede Phase zwei Windungen umfasst.

Figur 2 zeigt das Kopplungsmittel 102 mit einer ersten Windung 110, einer zweiten Windung 112, einer dritten Windung 114 und einer vierten Windung 116. Die erste Windung 110 und die zweite Windung 112 bilden eine ersten Phase, die dritte Windung 114 und die vierte Windung 116 bilden eine zweite Phase. Diese beiden Phasen werden in dem Kopplungsmittel 104 miteinander magnetisch gekoppelt.

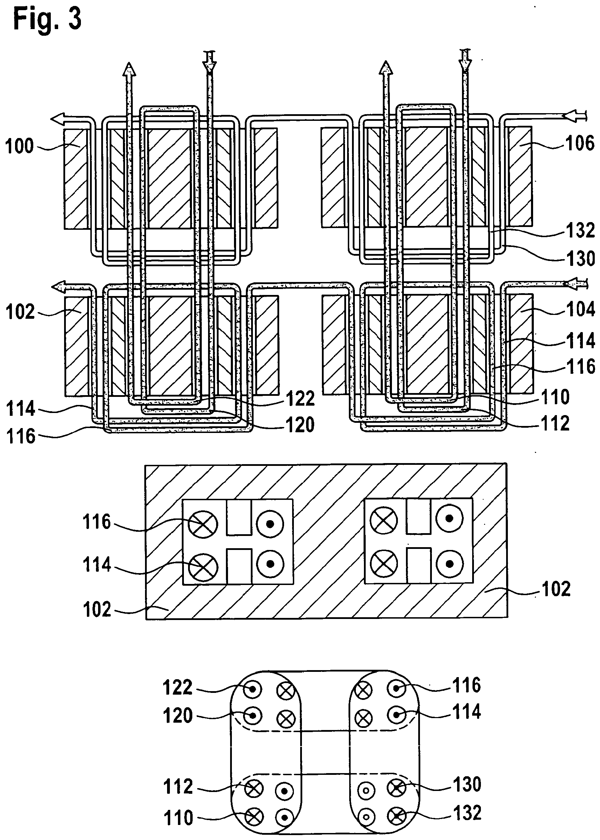

Diese Verkopplung ist in Figur 3 nochmals verdeutlicht. Wichtig ist, dass die Windungen der Phasen nebeneinander und übereinander angeordnet sein können. Zu erkennen sind weiterhin Windungen 120 und 122, die eine Phase bilden und Windungen 130 und 132, die eine Phase bilden.

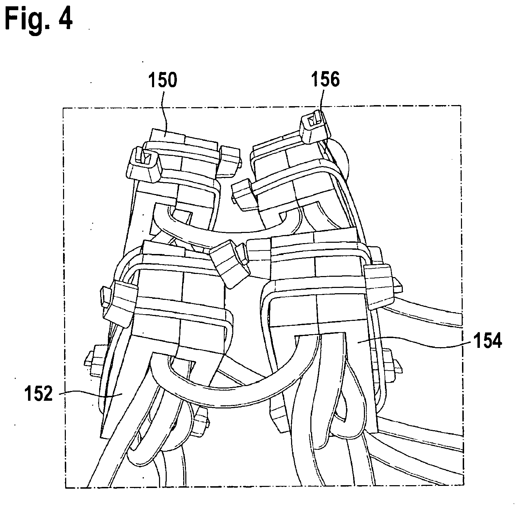

Figur 4 zeigt eine weitere Darstellung von Kopplungsmitteln 150, 152, 154 und 156, die jeweils zwei Phasen, die jeweils zwei Windungen umfassen, koppeln.

Der Aufbau eines Multiphasenwandlers 10 ist gemäß Figur 5 schaltungstechnisch dargestellt. Der hier beispielhaft beschriebene Multiphasenwandler 10 besteht aus sechs Phasen 11 bis 16. Jede der Phasen 11 bis 16 lässt sich einzeln über entsprechende Schaltmittel 21 bis 26 ansteuern, jeweils bestehend aus einem Highside-Schalter und einem Lowside-Schalter. Jeder Strom der Phasen 11 bis 16 fließt aufgrund magnetischer Kopplung mit drei weiteren Phasen durch drei Induktivitäten Lxx, die die entsprechenden Kopplungsmittel 31 bis 39 bewirken. Ein erstes Kopplungsmittel 31 koppelt die erste Phase 11 mit der zweiten Phase 12 magnetisch, so dass sich für die erste Phase 11 eine Induktivität L12, für die zweite Phase 12 eine Induktivität L21 ergibt. Ein sechstes Kopplungsmittel 36 koppelt die erste Phase 11 mit der sechsten Phase 16 magnetisch, so dass sich für die erste Phase 11 eine Induktivität L16, für die sechste Phase 16 eine Induktivität L61 ergibt. Ein siebtes Kopplungsmittel 37 koppelt die erste Phase 11 mit der vierten Phase 14 magnetisch, so dass sich für die erste Phase 11 eine Induktivität L14, für die sechste Phase 16 eine Induktivität L41 ergibt. Ein zweites Kopplungsmittel 32 koppelt die zweite Phase 12 mit der dritten Phase 13 magnetisch, so dass sich für die zweite Phase 12 eine Induktivität L23, für die dritte Phase 13 eine Induktivität L32 ergibt. Ein neuntes Kopplungsmittel 39 koppelt die zweite Phase 12 mit der fünften Phase 15 magnetisch, so dass sich für die zweite Phase 12 eine Induktivität L25, für die fünfte Phase 15 eine Induktivität L52 ergibt. Ein drittes Kopplungsmittel 33 koppelt die dritte Phase 13 mit der vierten Phase 14 magnetisch, so dass sich für die dritte Phase 13 eine Induktivität L34, für die vierte Phase 14 eine Induktivität L43 ergibt. Ein achtes Kopplungsmittel 38 koppelt die dritte Phase 13 mit der sechsten Phase 16 magnetisch, so dass sich für die dritte Phase 13 eine Induktivität L36, für die sechste Phase 16 eine Induktivität L63 ergibt. Ein viertes Kopplungsmittel 34 koppelt die vierte Phase 14 mit der fünften Phase 15 magnetisch, so dass sich für die vierte Phase 14 eine Induktivität L45, für die fünfte Phase 15 eine Induktivität L54 ergibt. Ein fünftes Kopplungsmittel 35 koppelt die fünfte Phase 15 mit der sechsten Phase 16 magnetisch, so dass sich für die fünfte Phase 15 eine Induktivität L56, für die sechste Phase 16 eine Induktivität L65 ergibt.

Ein Eingangsstrom I_{E} verteilt sich auf die sechs Phasen 11 bis 16. Am Eingang ist ein Kondensator als Filtermittel gegen Masse geschaltet. Die Ausgänge der Phasen 11 bis 16 sind an einem gemeinsamen Summationspunkt zusammengeführt und mittels einem nicht näher bezeichneten Kondensator als Filtermittel gegen Masse geschaltet. An dem gemeinsamen ausgangsseitigen Summationspunkt liegt dann der Ausgangsstrom I_{A} an. Die jeweils miteinander gekoppelten Induktivitäten Lxx sind mit unterschiedlichem Wicklungssinn zueinander orientiert wie durch die entsprechenden Punkte in Figur 1 angedeutet.

Hierbei können für jede Phase mindestens zwei Windungen bzw. Wicklungen vorgesehen sein.

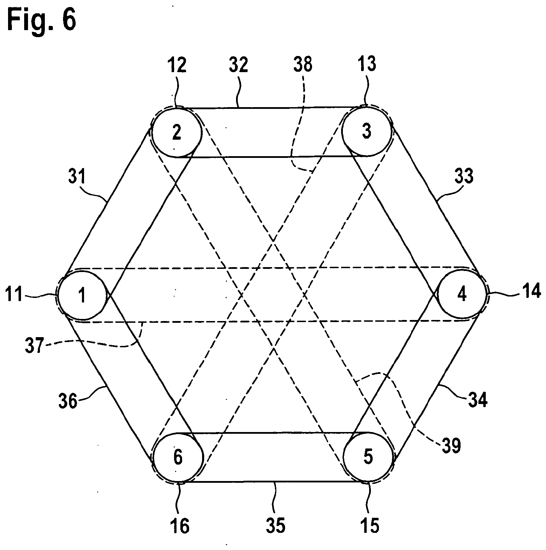

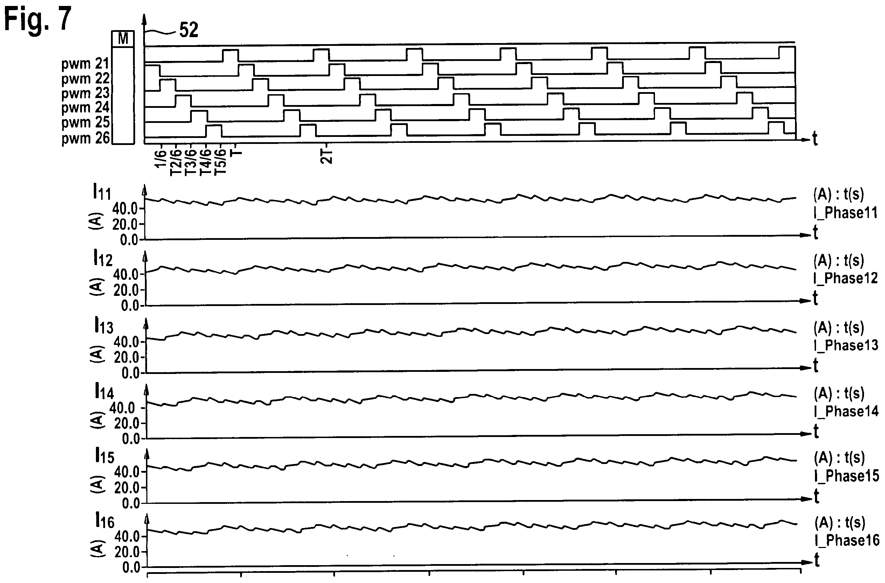

In Figur 6 ist systematisch dargestellt, wie die sechs Phasen 11 bis 16 durch entsprechende Kopplungsmittel 31 bis 39 miteinander verkoppelt sind. Wie bereits in Verbindung mit Figur 1 beschrieben, werden sowohl benachbarte Phasen miteinander verkoppelt wie auch zusätzlich die um 180 Grad versetzte Phase. Als benachbarte Phase wird eine solche verstanden, die zeitlich unmittelbar vorausgehend oder nachfolgend angesteuert wird, das heißt deren Einschaltzeitpunkte zeitlich unmittelbar vorher oder nachher liegen. Im Ausführungsbeispiel wird die Bezeichnung der Phasen 11 bis 16 so gewählt, dass die Phasen 11 bis 16 entsprechend der Nummerierung nacheinander angesteuert werden, das heißt in der Reihenfolge (Angaben entsprechen den Bezugszeichen der Phasen): 11 - 12 - 13 - 14 - 15 - 16 - 11 usw., jeweils um 60 Grad bzw. um T/6 (360 Grad/Anzahl der Phasen) phasenverschoben, wobei T die Periodendauer eines Ansteuerzyklus darstellt. Diese Reihenfolge ist auch in Figur 2 und Figur 7 gezeigt. Das heißt die Startzeitpunkte für die verschiedenen Phasen 11 bis 16 sind um jeweils 60 Grad phasenverschoben bzw. um jeweils T/6 zeitlich verschoben. In Figur 7 wird zwar die jeweilige Phase nach der zeitlichen Dauer T/6 wieder ausgeschaltet (PWM-Verhältnis 1/6). Je nach gewünschtem Spannungsverhältnis könnte die Abschaltung früher oder später, bis hin zu Dauer-Ein Te, erfolgen, je nach gewünschtem PWM-Signal (zwischen 0 % (Dauer-Aus, Te = 0) und 100 % (Dauer-Ein, Te = T), bezogen auf eine Periodendauer T).

Das Diagramm gemäß Figur 7 zeigt die zeitlichen Verläufe der Ansteuersignale 52 für die jeweiligen Schaltmittel 21 bis 26 der entsprechenden Phasen 11 bis 16 sowie die Stromverläufe in den Phasen 11 bis 16. Die Schaltmittel 21 bis 26 bestromen die zugehörigen Phasen 11 bis 16 nacheinander für jeweils ein Sechstel einer Periodendauer T, beispielsweise durch ein PWM-Signal, und sind anschließend im Freilauf. Die hieraus resultierenden Stromverläufe der einzelnen Phasen 11 bis 16 sind darunter beispielhaft gezeigt. Die Periodendauer T der Ansteuersignale 52 liegt beispielsweise in der Größenordnung von 0,01 ms. Die Startzeitpunkte für die verschiedenen Phasen 11 bis 16 sind um jeweils 60 Grad phasenverschoben bzw. zeitlich um T/6 versetzt. Der Startzeitpunkt der zweiten Phase 12 mit dem entsprechenden Ansteuersignal 52 des zweiten Schaltmittels 22 liegt bei t = 0 und wird nach 1/6 T wieder (abhängig vom gewünschten PWM-Verhältnis) ausgeschaltet. Der Startzeitpunkt der zur zweiten Phase 12 benachbarten dritten Phase 13 liegt bei T/6, der Startzeitpunkt der vierten Phase 14 bei 2T/6 und so fort. Zwar wird in Figur 7 die jeweilige Phase nach T/6 wieder ausgeschaltet (PWM-Verhältnis 1/6). Je nach gewünschtem Spannungsverhältnis könnte die Abschaltung jedoch früher oder später, bis hin zu Dauer-Ein, erfolgen, je nach gewünschtem PWM-Signal (zwischen 0 % (Dauer-Aus) und 100 % (Dauer-Ein)). Das heißt, es könnten zu einem bestimmten Zeitpunkt auch mehrere Phasen 11 bis 16 gleichzeitig bestromt werden, wenn dies die gewünschten Spannungsverhältnisse erfordern. Die Startzeitpunkte sind jedoch zeitlich versetzt.

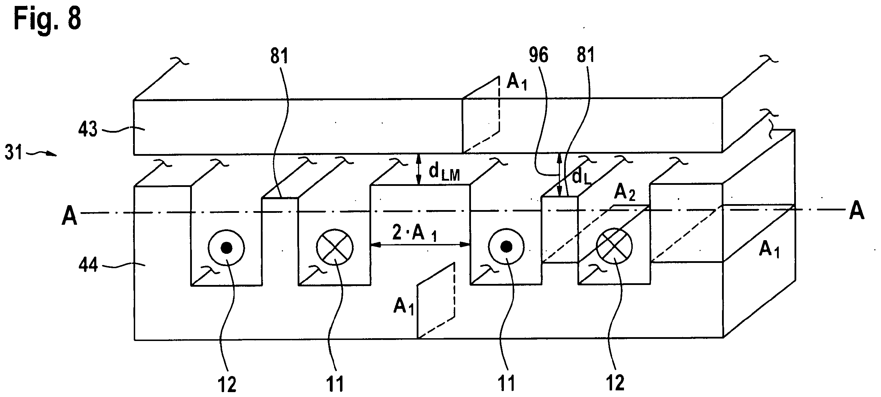

Figur 8 zeigt den Aufbau der Kopplungsmittel 31-39 beispielhaft anhand dem ersten Kopplungsmittel 31, das die erste Phase 11 und der zweite Phase 12 magnetisch koppelt. Das erste Kopplungsmittel 31 besteht aus einem im Wesentlichen E-förmigen ersten Teil 44 und einem plattenförmigen zweiten Teil 43, die die Spulenkerne bilden. Die äußeren Schenkel des ersten Teils 44 mit E-förmigem Querschnitt sind alle gleich lang, sodass sie durch das plattenförmige (I-förmiger Querschnitt) zweite Teil 43 ohne Luftspalt geschlossen, beispielsweise durch Kleben, werden können. Zwischen dem mittleren Schenkel und dem äußeren Schenkel des E-förmigen Teils 44 des Kopplungsmittels 31 ist jeweils ein Mittel 81 zur Beeinflussung des Streuflusses angeordnet. Dieses ist Teil des ersten Teils 44 und ist ebenfalls rechteckförmig ausgebildet und in derselben Weise wie die äußeren Schenkel orientiert. Allerdings ist das Mittel 81 zur Beeinflussung des Streuflusses etwas kürzer als die äußeren Schenkel, so dass sich ein Luftspalt 96 gegenüber dem zweiten Teil 43 im aufgesetzten Zustand bildet. Zwischen dem linken äußeren Schenkel des ersten Teils 44 und dem Mittel 81 zur Beeinflussung des Streuflusses ist die zweite Phase 12, zwischen dem Mittel 81 und dem mittleren Schenkel die erste Phase 11 mit entgegen gesetztem Stromfluss angeordnet. Zwischen der anderen Seite des mittleren Schenkels zu dem weiteren Mittel 81 zur Beeinflussung des Streuflusses befindet sich die erste Phase 11. Zwischen dem weiteren Mittel 81 und dem rechten äußeren Schenkel des ersten Teils 44 ist die zweite Phase 12 mit entgegen gesetztem Stromfluss angeordnet. Die äußeren Schenkel des ersten Teils 44 weisen in der Draufsicht eine Fläche Al auf. Der mittlere Schenkel des ersten Teils 44 weist in der Draufsicht bevorzugt eine Fläche 2*A1 auf. Die Schenkel der Mittel 81 zur Beeinflussung des Streuflusses 81 weisen eine Fläche A2 auf. Aus Gründen einer einfachen Fertigung werden die Kopplungsmittel 31 bis 39 jeweils aus den zwei Teilen 43, 44 wie beschrieben aufgebaut. Die äußeren und der mittlere Schenkel sind mit dem zweiten Teil 43 so verbunden, dass ein Magnetkreis geschlossen wird. Somit sind nur kleine Spalte, beispielsweise in der Größenordnung von ca. 10 µm, zugelassen. Damit die Mittel 81 den gewünschten Streufluss aufbauen, ist im Ausführungsbeispiel der Luftspalt 96 zwischen den Enden der Mittel und dem zweiten Teil 43 im aufgesetzten Zustand in der Größenordnung von 1 mm, bevorzugt zwischen 0,3 und 0,5 mm gewählt. Der Luftspalt 96 hängt auch von der Geometrie der Mittel 81 zur Beeinflussung des Streuflusses ab, insbesondere von der Fläche A2. Bei einer Fläche A1 von ca. 100 mm² und einer Fläche A2 von ebenfalls 100 mm² hat sich der oben angegebene Bereich des Luftspalts 96 bewährt.

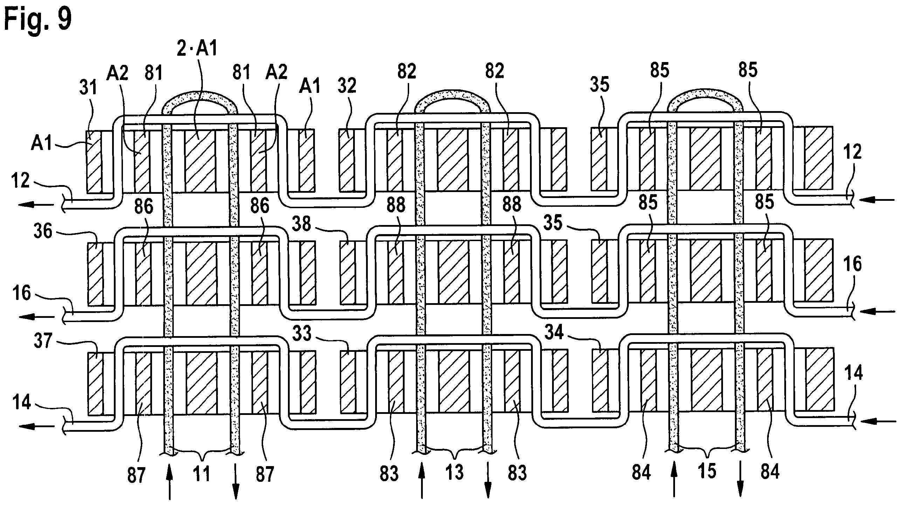

In Figur 9 ist nun schematisch der matrixförmige räumliche Aufbau des in Figur 6 gezeigten Konzepts abgebildet. Wie bereits in Verbindung mit Figur 1 beschrieben wird jede Phase 11 bis 16 mit drei weiteren Phasen magnetisch gekoppelt. Hierzu sind - beispielhaft für die erste Phase 11 - drei separate Kopplungsmittel 31, 36, 37 vorgesehen. Das erste Kopplungsmittel 31 koppelt die erste Phase 11 magnetisch mit der zweiten Phase 12. Das sechste Kopplungsmittel 36 koppelt die erste Phase 11 mit der sechsten Phase 16. Das siebte Kopplungsmittel 37 koppelt die erste Phase 11 mit der vierten Phase 14. Das bevorzugte Kopplungsprinzip und Kopplungsmittel 31 wurde bereits in Verbindung mit Figur 4 beschrieben. Die neun separaten Kopplungsmittel 31 bis 39 vorzugsweise als planare Spulenkerne, beispielsweise Ferritkerne, ausgebildet, die jeweils zwei Hohlräume aufweisen. In diesen Hohlräumen des Kopplungsmittels 31 bis 39 sind jeweils zwei Leiter bzw. Phasenabschnitte - von Mitteln 81 bis 89 zur Beeinflussung des Streuflusses räumlich getrennt - zweier zu verkoppelnder Phasen umschlossen, die in diesen Abschnitten unterschiedliche Stromrichtungen aufweisen. Die Hohlräume nehmen die zu koppelnden zwei Phasen (11, 12) auf. Sie könnten jedoch auch mit einem nicht ferromagnetischem Material zumindest teilweise gefüllt sein.

In der Draufsicht nach Figur 9 ist zu sehen, dass die Phasen 11 bis 16 nur zwei Formen aufweisen. Die erste, dritte und fünfte Phase 11, 13, 15 ist U-förmig ausgebildet. Die zweite, vierte und sechste Phase 12, 14, 16 ist mäanderförmig ausgebildet. Im Ausführungsbeispiel könnten die Phasen als isolierte flexible Rundleiter ausgeführt sein, die innerhalb der Kopplungsmitteln 31 bis 39 in derselben Ebene angeordnet sind.

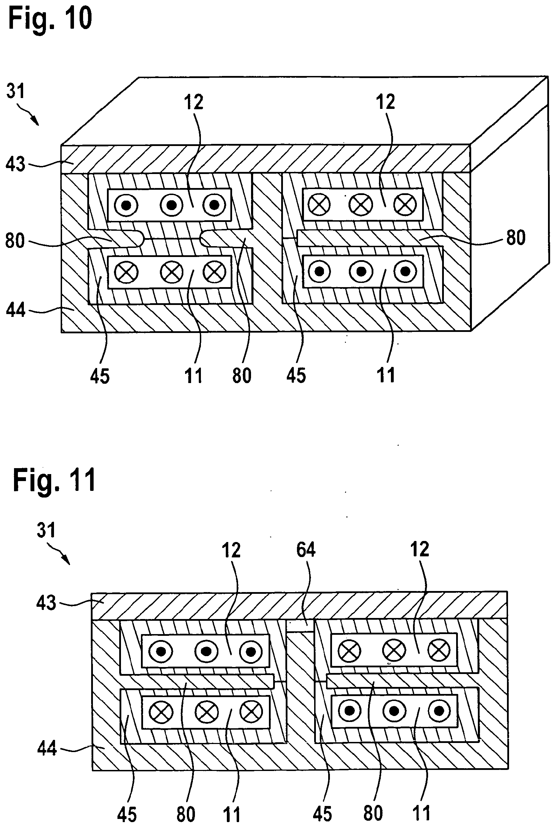

Exemplarisch weisen die Mittel 80 bis 89 zur Beeinflussung des Streuflusses unterschiedliche Formen auf. Die in Figur 10 links gezeigte Ausführung weist zwei domförmige Strukturen auf, die zwischen den Phasen 11, 12 angeordnet sind. Die domförmigen Strukturen 80 ragen von beiden Seiten zwischen den Phasen 11 und 12, ohne sich jedoch zu berühren. Die Enden der Mittel 80 zur Beeinflussung des Streuflusses sind beabstandet voneinander angeordnet, so dass sich der magnetische Kreis zwar nicht schließt, der Streufluss jedoch hin zu den Enden gelenkt wird. Die domförmigen Strukturen sind Bestandteil des zweiten Teils 44.

Die rechte Struktur des Mittels 80 zur Beeinflussung des Streuflusses gemäß Figur 10 weist einen rechteckförmigen Querschnitt auf, ist zwischen den beiden Phasen 11, 12 angeordnet und Bestandteil des zweiten Teils 44. Das Ende des Mittels 80 zur Beeinflussung des Streuflusses ist in Richtung zum mittleren Schenkel des zweiten Teils 44 orientiert, ohne diesen jedoch zu berühren. Dadurch entsteht kein magnetischer Hauptfluss. Vielmehr wird der Streufluss gezielt durch das Mittel 80 geführt und kann über den Abstand bzw. Luftspalt zu dem mittleren Schenkel des zweiten Teils 44 gezielt beeinflusst werden.

Durch das erste Kopplungsmittel 31 sind nun die erste Phase 11 und die zweite Phase 12 miteinander magnetisch verkoppelt. Durch die angedeutete antiparallele Stromführung wird erreicht, das resultierende Magnetfeld möglichst gering zu halten, sodass die Größe des Kopplungsmittels 31 minimiert werden kann. Außerdem ist zwischen der ersten Phase 11 und der zweiten Phase 12 jeweils eine Isolierung 45 vorgesehen zur elektrischen Trennung der beiden Phasen 11, 12 voneinander und jeweils zum Kopplungsmittel 31.

Das Ausführungsbeispiel nach Figur 11 unterscheidet sich von demjenigen nach Figur 10 darin, dass der mittlere Schenkel des E-förmigen ersten Teils 44 einen Luftspalt 64 in Richtung zum zweiten Teil 43 aufweist. Die Mittel 80 zur Beeinflussung des Streuflusses sind plattenförmig ausgeführt und zwischen den Phasen 11, 12 angeordnet. Im Ausführungsbeispiel sind die Enden der Mittel 80 zur Beeinflussung des Streuflusses jeweils in Richtung des mittleren Schenkels des zweiten Teils 44 orientiert, ohne diesen zu berühren.

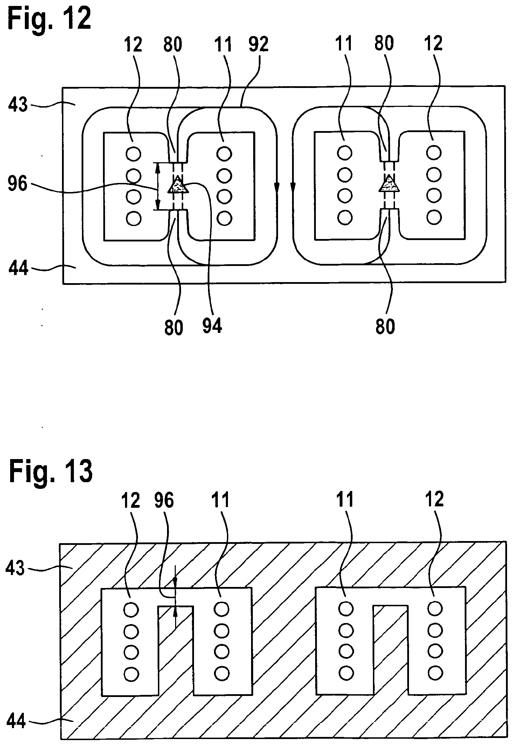

Die Ausführungsbeispiele nach den Figur 12 bis 14 unterscheiden sich von den vorhergehenden insbesondere in der Anordnung der Phasen 11, 12. Die zu koppelnden Phasen 11, 12 sind jeweils nebeneinander angeordnet und bandförmig ausgebildet. Bei Figur 12 sind die Mittel 80 zur Beeinflussung des Streuflusses domförmig ausgebildet. Weiterhin werden die zwei Abschnitte der ersten Phase 11 durch den mittleren Schenkel des zweiten Teils 44 getrennt, sind also benachbart zueinander angeordnet.

Das Ausführungsbeispiel gemäß Figur 9 unterscheidet sich von demjenigen nach Figur 8 nur in der plattenförmigen Ausgestaltung der Mittel 80 zur Beeinflussung des Streuflusses.

Das Ausführungsbeispiel gemäß Figur 9 unterscheidet sich von demjenigen nach Figur 8 darin, dass nun erste und zweite Phase 11, 12 immer abwechselnd angeordnet sind.

Das Ausführungsbeispiel gemäß Figur 11 unterscheidet sich von demjenigen nach Figur 9 darin, dass die Phasen 11, 12 als Rundleiter ausgeführt sind.

### Beschreibung der Ausführungsbeispiele

Die beschriebenen Ausführungsbeispiele arbeiten wie nachfolgend näher erläutert. Multiphasenwandlern 10 bzw. DC/DC-Wandler mit hohen Leistungen ohne besondere Isolationsanforderungen können bevorzugt in mehrphasigen Anordnungen realisiert werden. Dadurch verteilt sich der hohe Eingangsstrom I_{E} beispielsweise in Höhe von 300A auf die verschiedenen sechs Phasen 11 bis 16 in Höhe von jeweils 50A. Durch die anschließende Überlagerung der einzelnen Ströme zu einem Ausgangsstrom I_{A} kann ein geringerer Wechselstromanteil erzielt werden. Dann können die entsprechenden Eingangs- bzw. Ausgangsfilter gemäß Figur 5, beispielhaft als Kondensatoren eingezeichnet, entsprechend klein ausfallen. Die Ansteuerung der Phasen 11 bis 16 erfolgt sequentiell, das heißt nacheinander, so dass die Einschaltzeitpunkte jeweils 60 Grad (bzw. zeitlich um T/6) phasenverschoben sind (bei dem beschriebenen Sechs-PhasenSystem), wie dies in Figur 11 bereits näher gezeigt wurde. Abhängig von den gewünschten Spannungsverhältnissen werden die jeweiligen Phasen 11 bis 16 mit unterschiedlicher Dauer bestromt. Der entsprechende High-Side-Schalter des Schaltmittels 21 bis 26 wird hierzu geschlossen. Die Phase 11 bis 16 wird nicht bestromt, wenn der entsprechende Low-Side-Schalter des Schaltmittels 21 bis 26 geschlossen ist. Alternativ könnten auch solche Phasen 11 bis 16 als benachbart angesehen werden, deren Ausschaltzeitpunkte unmittelbar vorher oder nachher liegen. Dann würden die entsprechenden Einschaltpunkte variabel in Abhängigkeit vom gewünschten PWM-Signal gewählt werden.

Es wird nun jeweils eine Phase 11 mit zumindest drei weiteren Phasen 12, 14, 16 miteinander magnetisch gekoppelt, und zwar in der Weise, dass die Gleichanteile der einzelnen Phasen jeweils durch andere Phasen möglichst stark kompensiert werden. Dadurch reduziert sich das resultierende Magnetfeld, so dass die Auslegung der Kopplungsmittel 31 bis 39 bzw. des magnetischen Kreises nur noch im Wesentlichen auf das vom Wechselanteil erzeugte Magnetfeld erfolgen muss. Dadurch können die Kopplungsmittel 31 bis 39, wie beispielsweise Spulenkerne, entsprechend klein dimensioniert werden, was zu erheblichen Ersparnissen an Kopplungsmaterial, Masse und Kosten führt. Insbesondere der Bauraum lässt sich dadurch stark reduzieren.

Neben den beiden mit Blick auf die Ansteuerung (Einschalt- bzw. Ausschaltzeitpunkte) benachbarten Phasen wird nun vorzugsweise die dritte zu verkoppelnde Phase derart ausgewählt, dass eine störende gegenseitige Beeinflussung der Phasen minimiert wird. Die Auswahl erfolgt so, dass eine optimale Kompensation des Gleichstromanteils erzielt wird. Hierbei hat sich ergeben, dass sich neben den benachbarten Phasen (+/- 60 Grad Phasenverschiebung der Einschaltzeitpunkte bei sechs Phasen, für die erste Phase 11 wären die benachbarten Phasen somit die zweite Phase 12 und die sechste Phase 16) auch die Phase mit einem Phasenversatz von 180 Grad (für die erste Phase 11 wäre dies die vierte Phase 14) besonders eignet, da sich dort eine sehr hohe Auslöschung des Gleichanteils ergibt. Die beiden Ströme durch die gekoppelten Phasen 11, 14 fließen entgegengesetzt im siebten Kopplungsmittel 37. Der resultierende Strom I res für die Magnetisierung des Kopplungsmittels 37 wird dabei nur durch die Differenz der Ströme I res ausgelöst. Die Gleichfelder heben sich größtenteils auf. Der reduzierte Gleichanteil macht sich positiv bemerkbar für die Geometrie des Kopplungsmittels 31 bis 39, welches nun mit einem geringeren Volumen auskommen kann. Bei sechs Phasen 11 bis 16 hat sich die in Figur 5 gezeigte Kopplung als besonders geeignet herausgestellt.

### Magnetische Kopplung

Prinzipiell lassen sich zwei Phasen magnetisch koppeln, indem die beiden Phasen mit antiparalleler Stromführung durch ein rechteckförmiges oder ringförmiges Kopplungsmittel 31 bis 39 geführt werden. Wesentlich ist, dass das Kopplungsmittel 31 bis 39 in der Lage ist, einen magnetischen Kreis auszubilden.

Dies ist bei einer im Wesentlichen geschlossenen Struktur möglich, die auch einen Luftspalt umfassen kann. Weiterhin besteht das Kopplungsmittel 31 bis 39 aus einem Magnetfeld leitenden Material mit geeigneter Permeabilität.

Das der Figur 6 zu Grunde liegende Kopplungskonzept lässt sich exemplarisch anhand der Figur 9 erläutern. Wesentlich ist, dass die zu verkoppelnden Phasen - gemäß Figur 8 sind es erste Phase 11 und zweite Phase 12 - mit gegenläufigem Stromfluss angesteuert werden. Die jeweils entsprechenden magnetischen Felder heben sich im Wesentlichen betreffend ihres Gleichanteils auf, so dass überwiegend nur noch der Wechselanteil zur Magnetfelderzeugung beiträgt. In der Folge können die entsprechenden Kopplungsmittel 31 bis 39 kleiner werden bzw. es kann auf einen Luftspalt verzichtet werden.

### Aufbau Kopplungsmittel

Bei den Kopplungsmitteln 31 bis 39 handelt es sich um Mittel einer induktiven Kopplung, wie beispielsweise ein Eisen- oder Ferritkern eines Transformators, auf dem die zu verkoppelnden Phasen 11 bis 16 ein Magnetfeld erzeugen. Das Kopplungsmittel 31 bis 39 schließt den magnetischen Kreis der jeweils zwei verkoppelten Phasen 11 bis 16.

Die Wahl des Materials des Kopplungsmittels 31 bis 39 und der Permeabilität spielt für die Kopplung keine so große Rolle. Wird kein Luftspalt verwendet, steigt die Permeabilität des magnetischen Kreises, wodurch die Induktivität der Spule größer wird. Dadurch wird der Stromanstieg flacher und die Stromformen nähern sich mehr dem idealen Gleichstrom an. Je näher die Kurvenformen einem Gleichstrom kommen, desto geringer ist die resultierende Stromdifferenz zwischen den beiden Phasen, die (entgegengesetzt) durch einen Kern als Kopplungsmittel 31 bis 39 geführt werden. Der Aufwand für Filter wird dadurch reduziert. Auf der anderen Seite reagiert ein System ohne Luftspalt sehr sensibel auf unterschiedliche Ströme zwischen den Phasen 11 bis 16. Obwohl das System dazu neigt, bei geringeren Stromfehlern in Sättigung zu gehen, ist es durch die Mehrfachverkopplung aber immer noch recht stabil. Grundsätzlich können Luftspalte mit unterschiedlicher Abmessung so gewählt werden, um die Verluste gleichmäßig auf die Kopplungsmittel 31 bis 39 zu verteilen. Kopplungsmittel 31 bis 39 mit geringerer Induktivität L weisen auch prinzipiell geringere Verlustleistung auf.

Um einen guten Kompromiss aus hoher Permeabilität (Kein Luftspalt -> geringer Stromripple) und hoher Robustheit (mit Luftspalt -> hoher Stromripple) zu bekommen, können unterschiedliche Luftspalte vorgesehen werden. Auf diese Weise können auch die Verlustleistungen der Kopplungsmittel 31 bis 39 so beeinflusst werden, dass gewünschte Kriterien, beispielsweise gleichmäßige Verteilung der Verlustleistung, erfüllt werden.

Bei dem Ausführungsbeispiel gemäß Figur 9 werden die Kopplungsmittel in einer der Diagonalen (entweder Kopplungsmittel 31, 38, 34 bzw. 37, 38, 39) mit einem Luftspalt zu versehen. Dadurch ergibt sich mit nur drei Kopplungsmitteln 31, 38, 34 bzw. 37, 38, 39 mit Luftspalt (was zu einem höheren Stromripple führt) auf allen Phasen 11 bis 16 ein hoher Schutz gegen Sättigung und damit verbundenen ein Schutz gegen unkontrolliertem Stromanstieg. Im Falle einer großen Unsymmetrie zwischen den Phasen 11 bis 16 oder auch beim Ausfall von mehreren Phasen 11 bis 16 würden nur einzelne Kopplungsmittel 31 bis 42 in Sättigung gehen, aber bei gegebenen Strom nicht alle Kopplungsmittel 31 bis 39 einer Phase.

Eine weitere Variante wäre, die Kopplungsmittel 31 bis 39 innerhalb des Aufbaus mit unterschiedlichen Luftspalten auszubilden. Die Kopplungsmittel (im Ausführungsbeispiel nach den Figuren 1, 3, 5 sind dies die Kopplungsmittel mit den Bezugszeichen 37, 38, 39), die auf Grund der 180 Grad phasenversetzten Ansteuerung (wie sie durch Verkopplung der ersten Phase 11 mit der vierten Phase 14 durch das siebte Kopplungsmittel 37; Verkopplung der zweiten Phase 12 mit der fünften Phase 15 durch das neunte Kopplungsmittel 39; Verkopplung der dritten Phase 13 mit der sechsten Phase 16 durch das achte Kopplungsmittel 38 entsteht) mit einer größeren erhöhten Magnetisierung belastet werden, könnten zum Beispiel durch Anpassung bzw. Vorsehen eines Luftspalts in ihrer Belastung reduziert werden. Dies würde die Gesamtkernverluste reduzieren.

Ferner wäre es möglich, bei dem Matrixkonzept in jeder Zeile/Spalte ein Kopplungsmittel 31 bis 39 mit einem größeren Luftspalt bzw. Spalt zu versehen. Dadurch würde dieses mit einem Luftspalt versehene Kopplungsmittel 31 bis 39 erst bei höheren Strömen sättigen, so dass sich eine weiter verbesserte Stabilität im Fehlerfall ergibt. Aus Stabilitätsgründen wäre es vorteilhaft, jede Phase 11 bis 16 durch zumindest ein Kopplungsmittel 31 bis 39 zu führen, das später als die anderen Kopplungsmittel 31 bis 39 in dieser Phase in Sättigung geht durch Vorsehen einer geringeren Induktivität L, was durch das Vorsehen eines Luftspalts erreicht werden könnte.

In dem Ausführungsbeispiel nach Figur 11 ist ein Beispiel eines mit einem Luftspalt 64 versehen Kopplungsmittels 31 gezeigt. Hierzu ist der mittlere Schenkel des E-förmigen ersten Teils 44 gegenüber den äußeren Schenkel etwas verkürzt ausgebildet, so dass ein Luftspalt 64 in Richtung zum zweiten Teil 43 entsteht. Alternativ könnte vorgesehen sein, die Schenkel des E-förmigen ersten Teils 44 gleich groß auszuführen, jedoch zwischen den Enden der Schenkel und dem zweiten Teil 43 einen Luftspalt beispielsweise durch eine nichtmagnetischen Folie vorzusehen. Dem Fachmann sind Maßnahmen geläufig, wie die gewünschte Induktivität L des jeweiligen Kopplungsmittels 31 bis 39 erzielt werden kann, beispielsweise durch Vorsehen geeigneter Luftspalt(e) an den geeigneten Stellen.

### Aufbau der Phasen

Fertigungstechnisch besonders vorteilhaft ist die Verwendung lediglich zweier geometrischer Formen der Phasen 11 bis 16 wie in Figur 5 in der Draufsicht dargestellt. Die eine Grundform weist hierbei einen U-förmigen Verlauf auf. Die zweite Grundform ist im Wesentlichen rechteck- bzw. mäanderförmig. Die gezeigten Abschnitte können als Bandleiter in Form von Stanzgittern, in entsprechenden Leiterbahnen in einer Platine integriert oder als Rundleiter ausgeführt sein.

Eine weitere magnetische Kopplung der einzelnen Kerne der Kopplungsmittel 31 bis 39 zu einem großen Gesamtkern kann zu weiteren Ersparnissen führen, indem beispielsweise eine einzige Abdeckplatte 43 für alle Unterteile 44 der neun Kopplungsmittel 31 bis 39 vorgesehen ist.

### Mittel 80 bis 89 zur Beeinflussung des Streuflusses

In Figur 12 ist mit durchgängigen Pfeilen 92 der magnetische Hauptfluss angedeutet, der durch jeweils um zwei magnetisch zu koppelnde Phasen 11, 12 durch das ferromagnetische Kopplungsmittel 43, 44 verläuft. Mit gestrichelten Pfeilen 94 ist der magentische Streufluss angedeutet. Der magnetische Streufluss verläuft durch nicht ferromagnetisches Material, beispielsweise durch Luft oder einen die Phasen 11, 12 umgebenden Kunststoff bzw. Isolator. Die Mittel 80 zur Beeinflussung des Streuflusses sind nun so aufgebaut, dass sie den Streufluss gezielt zwischen zwei zu koppelnden Phasen 11, 12 lenken. Dies erfolgt durch Vorsprünge aus ferromagnetischem Material, die räumlich zwischen den Phasen 11, 12 angeordnet sind. Diese Vorsprünge sind mit den eigentlichen ferromagnetischen Kopplungsmitteln 43, 44 magnetflussleitend verbunden. Die Vorsprünge können Bestandteile des Kopplungsmittels 43, 44 sein. Es könnten jedoch auch separate ferromagnetische Teile vorgesehen werden.

Das Mittel zur Beeinflussung des Streuflusses könnte einen rechteckförmigen Querschnitt aufweisen. Dank der besonders einfachen Geometrie lässt sich eine solche Anordnung einfach und kostengünstig herstellen.

Alternativ können die Mittel 80 bis 89 zur Beeinflussung des Streuflusses auch eine domförmige Struktur aufweisen. Hierunter wird im Gegensatz zu einer rechteckförmigen Struktur eine solche verstanden, die sich zum Ende hin verjüngt. Es könnte ein stetiger, beispielsweise parabelförmiger, verrundeter oder kreisförmiger Übergang zum Kopplungsmittel 44 erfolgen. Die Dome können direkt im Herstellungsprozess (Pressen) der Ferritkerne verwirklicht werden.

Das Mittel 80 zur Beeinflussung des Streuflusses ist zwischen den zu koppelnden Phasen 11, 12 angeordnet. Dabei könnte es nur von einer Seite des Kopplungsmittels 44 zu der gegenüberliegenden Seite des Kopplungsmittels 43 ragen wie in den Figuren 9 bis 11 gezeigt. Alternativ könnten die Mittel 80 von zwei Seiten des Kopplungsmittels 43, 44 zwischen die Phasen 11, 12 hineinragen. Bevorzugt liegen deren Enden gegenüber wie in Figur 8 angedeutet. Die Enden der Mittel zur Beeinflussung des Streuflusses sind beabstandet voneinander angeordnet, so dass sich der magnetische Kreis zwar nicht schließt, der Streufluss jedoch hin zu den Enden gelenkt wird.

Bevorzugt sind die Mittel 80 zur Beeinflussung des Streuflusses auf der Symmetrieachse zweier zu koppelnder Leiter angeordnet. Vorzugsweise ist der Querschnitt der Mittel 80 zur Beeinflussung des Streufeldes bezogen auf diese Symmetrieachse auch achssymmetrisch ausgeführt.

Der magnetische Streufluss verläuft zwischen den Enden des Mittels 80 (Fig. 12) bzw. dem Ende des Mittels und dem Kopplungsmittel 43, 44 (Figuren 13 bis 15) in einer Spaltlänge 86 in einem nicht ferromagnetischen Medium. Über die Geometrie des Mittels 80 und die sich daraus ergebende Spaltlänge 86 lassen sich die Signalverläufe des Multiphasenwandlers weiter optimieren.

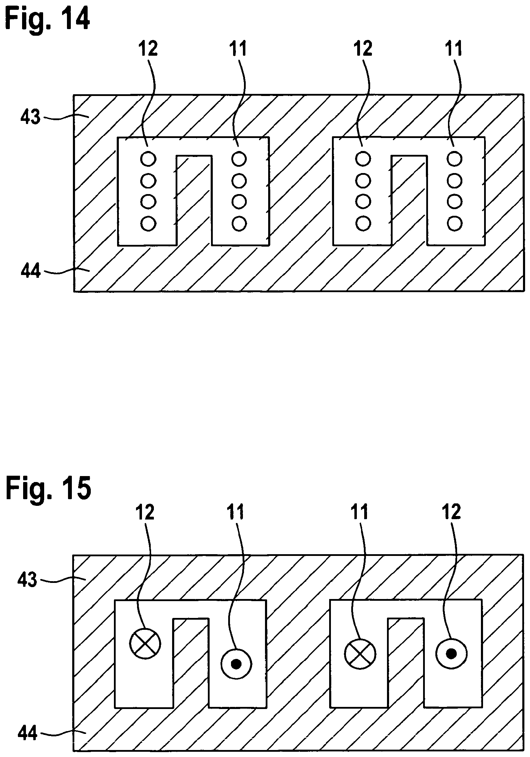

Gemäß Figur 15 wurden die Phasen 11, 12 nun statt eines Flachdrahtes (übereinander: Figur 10) als nebeneinander verlegte Runddraht ausgeführt. Dadurch erhöhen sich die Streuflüsse und die Störungen können weiter reduziert werden.

Kopplungsmittel 43, 44 und Mittel 80 zum Beeinflussen eines Streuflusses wurden aus dem Material 3C95 ausgeführt. Weiterhin wurde ein Spalt 96 beispielsweise in der Größenordnung von 1mm vorgesehen. Bei dieser Auswahl konnte der Stromripple/Stromsteilheit weiter reduziert werden. Über diesen Spalt 96 können Sättigungseffekte ausgeschlossen werden.

Der beschriebene Multiphasenwandler 10 eignet sich insbesondere für den Einsatz in einem Kraftfahrzeugbordnetz, bei dem insbesondere dynamische Lastanforderungen von untergeordneter Bedeutung sind. Insbesondere für solche vergleichsweise trägen Systeme eignet sich der beschriebene Aufbau.

In dem aktuell eingesetzten Kernmodell wird der Streufluss durch einen zusätzlichen Streuschenkel eingestellt, der zwischen den beiden Windungen eingebracht wird. Durch den Aufbau des Kernes lässt sich das Verhalten individuell auf die Applikation einstellen. Hauptparameter sind dabei die beiden Luftspalte, die sich applikationsspezifisch festlegen lassen.

Durch das Einbringen von mehr als einer Windung pro verkoppelter Phase lassen sich die Kernverluste, die durch das Ummagnetisieren des Kernes entstehen, stark reduzieren. Sinnvoll sind dabei Windungszahlen von 2 oder 3, zumindest im niedrigen Bereich um die Windungsverluste durch die Wicklungslänge gering zu halten.

Bei den in den Figuren gezeigten Kopplungsmitteln können mehr als zwei Windungen pro Phase vorgesehen sein.

## Patentansprüche

1. Multiphasenwandler mit genau vier elektrischen Phasen, die jeweils durch ein Schaltmittel ansteuerbar sind, umfassend vier Kopplungsmittel (100 bis 106; 150 bis 156), die jeweils eine Phase mit genau einer anderen Phase koppeln, **dadurch gekennzeichnet, dass** pro Phase (11 bis 16) zwei Windungen (110 bis 116; 120; 122; 130; 132) vorgesehen sind und zumindest eines der Kopplungsmittel (100 bis 106; 150 bis 156) zumindest ein Mittel (80 bis 89) zur Beeinflussung eines magnetischen Streuflusses aufweist.

2. Multiphasenwandler nach Anspruch 1, bei dem das Mittel (80 bis 89) zur Beeinflussung des Streuflusses entweder nur auf einer Seite oder von zwei Seiten mit dem Kopplungsmittel (100 bis 106; 150 bis 156) verbunden ist.

3. Multiphasenwandler nach einem der Ansprüche 1 bis 2, **dadurch gekennzeichnet, dass** zwischen dem Mittel (80 bis 89) zur Beeinflussung des Streuflusses und dem Kopplungsmittel (100 bis 106; 150 bis 156) ein Spalt vorgesehen ist.

4. Multiphasenwandler nach einem der Ansprüche 1 bis 3, bei dem das Mittel (80 bis 89) zur Beeinflussung des Streuflusses rechteckförmig oder domförmig ausgebildet ist.

5. Multiphasenwandler nach einem der vorhergehenden Ansprüche, bei dem zumindest eine Phase (11 bis 16) U-förmig und die damit gekoppelte Phase (11 bis 16) mäanderförmig ausgebildet ist.

6. Multiphasenwandler nach einem der vorhergehenden Ansprüche, bei dem das Schaltmittel (21 bis 26) die Phasen (11 bis 16) sequentiell ansteuern und die erste Phase (11 bis 16) mit zumindest einer weiteren Phase (11 bis 16) magnetisch gekoppelt ist, die unmittelbar vorher und nachher angesteuert ist.

7. Multiphasenwandler nach einem der vorhergehenden Ansprüche, bei dem eine Phase (11 bis 16) mit zumindest einer weiteren Phase (11 bis 16) magnetisch gekoppelt ist, die im Wesentlichen um etwa 180° phasenverschoben angesteuert ist.

## Claims

1. Multiphase converter comprising precisely four electrical phases, which are each drivable by a switching means, comprising four coupling means (100 to 106; 150 to 156), which couple in each case one phase to precisely one other phase, **characterized in that** two turns (110 to 116; 120; 122; 130; 132) are provided per phase (11 to 16) and at least one of the coupling means (100 to 106; 150 to 156) has at least one means (80 to 89) for influencing a magnetic leakage flux.

2. Multiphase converter according to Claim 1, in which the means (80 to 89) for influencing the leakage flux is connected either on only one side or on two sides to the coupling means (100 to 106; 150 to 156).

3. Multiphase converter according to either of Claims 1 and 2, **characterized in that** a gap is provided between the means (80 to 89) for influencing the leakage flux and the coupling means (100 to 106; 150 to 156).

4. Multiphase converter according to one of Claims 1 to 3, in which the means (80 to 89) for influencing the leakage flux is rectangular or dome-shaped.

5. Multiphase converter according to one of the preceding claims, in which at least one phase (11 to 16) is U-shaped and the phase (11 to 16) coupled thereto is meandering.

6. Multiphase converter according to one of the preceding claims, in which the switching means (21 to 26) drive the phases (11 to 16) sequentially, and the first phase (11 to 16) is magnetically coupled to at least one further phase (11 to 16), which is driven directly beforehand and afterward.

7. Multiphase converter according to one of the preceding claims, in which a phase (11 to 16) is magnetically coupled to at least one further phase (11 to 16), which is driven with a phase shift substantially through approximately 180°.

## Revendications

1. Convertisseur polyphasé comportant exactement quatre phases électriques pouvant respectivement être commandées par l'intermédiaire d'un moyen de commutation, comprenant quatre moyens de couplage (100 à 106 ; 150 à 156) qui couplent respectivement une phase à exactement une autre phase, **caractérisé en ce qu'**il est prévu deux enroulements (110 à 116 ; 120 ; 122 ; 130 ; 132) par phase (11 à 16) et **en ce qu'**au moins l'un des moyens de couplage (100 à 106 ; 150 à 156) comporte au moins un moyen (80 à 89) destiné à influer sur un flux de diffusion magnétique.

2. Convertisseur polyphasé selon la revendication 1, dans lequel le moyen (80 à 89) destiné à influer sur le flux de diffusion est relié au moyen de couplage (100 à 106 ; 150 à 156) soit d'un seul côté, soit des deux côtés.

3. Convertisseur polyphasé selon l'une des revendications 1 et 2, **caractérisé en ce qu'**un interstice est prévu entre le moyen (80 à 89) destiné à influer sur le flux de diffusion et le moyen de couplage (100 à 106 ; 150 à 156).

4. Convertisseur polyphasé selon l'une des revendications 1 à 3, dans lequel le moyen (80 à 89) destiné à influer sur le flux de diffusion est réalisé sous forme rectangulaire ou en forme de dôme.

5. Convertisseur polyphasé selon l'une des revendications précédentes, dans lequel au moins une phase (11 à 16) est réalisée en forme de U et la phase (11 à 16) qui lui est couplée est réalisée en forme de méandre.

6. Convertisseur polyphasé selon l'une des revendications précédentes, dans lequel le moyen de commutation (21 à 26) commande séquentiellement les phases (11 à 16) et la première phase (11 à 16) est couplée magnétiquement à au moins une autre phase (11 à 16) qui est commandée immédiatement avant et après.

7. Convertisseur polyphasé selon l'une des revendications précédentes, dans lequel une phase (11 à 16) est couplée magnétiquement à au moins une autre phase (11 à 16) qui est sensiblement déphasée d'environ 180°.
